(19) **Europäisches Patentamt / European Patent Office / Office européen des brevets**

(11) **EP 2 106 955 A1**

(12) **EUROPEAN PATENT APPLICATION**
published in accordance with Art. 153(4) EPC

(43) Date of publication:
**07.10.2009 Bulletin 2009/41**

(21) Application number: **08703184.5**

(22) Date of filing: **15.01.2008**

(51) Int Cl.:
**B60L 15/20** (2006.01)     **B60L 11/14** (2006.01)
**B60T 8/1755** (2006.01)     **B60W 10/08** (2006.01)
**B60W 30/02** (2006.01)

(86) International application number:
**PCT/JP2008/050320**

(87) International publication number:
**WO 2008/087925 (24.07.2008 Gazette 2008/30)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.01.2007 JP 2007009231**

(71) Applicant: **Hitachi, Ltd.**
**Chiyoda-ku**
**Tokyo 100-8220 (JP)**

(72) Inventors:
• **MORIKI, Hidekazu**
**Hitachinaka-shi**
**Ibaraki 312-0034 (JP)**
• **IMURA, Shinya**
**Hitachinaka-shi**
**Ibaraki 312-0034 (JP)**

• **MATSUZAKI, Norikazu**
**Hitachinaka-shi**
**Ibaraki 312-8503 (JP)**
• **ITOH, Kohei**
**Hitachinaka-shi**
**Ibaraki 312-0062 (JP)**
• **FUJIWARA, Shin**
**Hitachinaka-shi**
**Ibaraki 312-0062 (JP)**

(74) Representative: **Erny, Tobias**
**MERH-IP**
**Matias Erny Reichl Hoffmann**
**Paul-Heyse-Strasse 29**
**80336 München (DE)**

(54) **AUTOMOBILE AND CONTROL DEVICE FOR AUTOMOBILE**

(57)     The invention is to provide an automobile and a control device for the automobile, which permits to obtain a driving performance or a braking performance close to their limits achievable on the concerned road face even such as on a compacted snow road and a frozen road.

    In the control device for the automobile for controlling a driving torque and/or a braking torque for wheels of the automobile, when a slip rate of the wheels is kept in a range smaller than a value where a friction coefficient between the wheels and the road face maximizes, and when a command for increasing the driving torque or the braking torque is input to the control device, the driving torque or the braking torque is controlled by selectively using a first control mode for gradually increasing the driving torque or the braking torque or a second control mode for gradually decreasing the driving torque or the braking torque in response to a slip condition.

FIG. 10

**Description**

TECHNICAL FIELD

The present invention relates to an automobile and a control device for an automobile, and in particular, relates to an automobile and a control device for an automobile that perform a driving torque control and a braking torque control for suppressing an idling of wheels for the automobile with respect to a traveling road face.

BACKGROUND ART

When accelerating a vehicle such as an automobile, an outer circumferential velocity of the wheels becomes higher than the car body velocity due to a driving torque applied to the wheels, and a frictional force between the wheels and the road face due to slipping is caused. This frictional force generates a driving force to accelerate the vehicle. Likely, during deceleration a frictional force between the wheels and the road face due to slipping becomes a braking force to decelerate or stop the vehicle.

As an index representing a degree of slipping between wheels and a road face, a slip rate SR is proposed as defined by the following equations (1) and (2). Wherein equation (1) is the slip rate SR at the time of driving and equation (2) is the slip rate SR at the time of braking.

$$SR = (VW - VG)/VW \qquad \cdots (1)$$

$$SR = (VG - VW)/VG \qquad \cdots (2)$$

Wherein, VG is a car body velocity, and VW is an outer circumferential velocity of a wheel.

A frictional force due to slipping depends on a friction coefficient $\mu$ between a wheel and a road face, and the friction coefficient $\mu$ varies in response to a slip rate SR.

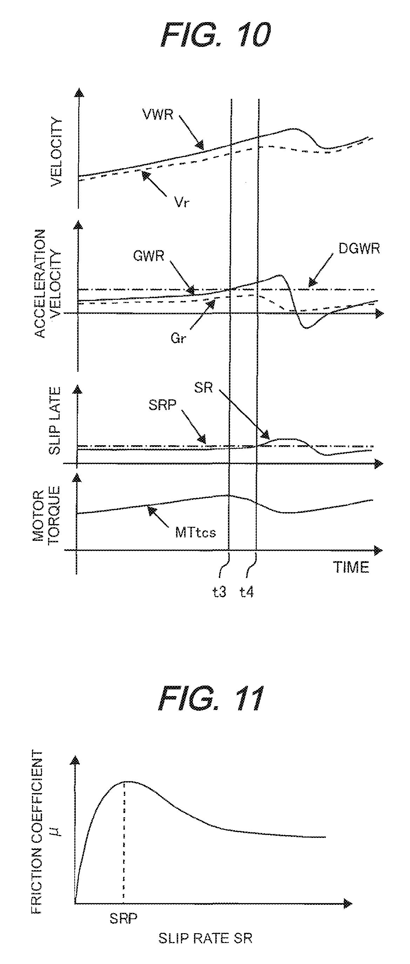

As shown in Fig.11, in a region where a slip rate SR is low, a friction coefficient $\mu$ increases together with an increase of a slip rate SR. And in this region, a frictional force in response to a driving toque or a braking torque can be obtained.

However, a friction coefficient $\mu$ assumes the maximum value at a certain slip rate SRP (generally recognized as about 0.05 ~ 0.30), and when the slip rate SR increases beyond the value, a friction coefficient $\mu$ decreases. Thereby, a frictional force in response to a driving force or a braking force cannot be obtained in this region.

For this reason, in order to obtain a frictional force in response to a driving force or a braking force, it is necessary to suppress the slip late SR below the slip rate SRP where the friction coefficient $\mu$ maximizes.

As a braking force control device for an automobile, an anti lock brake device is proposed in which a wheel velocity at the slip rate where the friction coefficient $\mu$ between the wheels and the road face maximizes is computed by presumption as a target wheel velocity, and the braking force is controlled so that the wheel velocity computed by presumption coincides with the target wheel velocity (for example, disclosed in patent document 1). In this control device, a target wheel acceleration velocity is computed by differentiating the target wheel velocity, and through comparison of a wheel acceleration velocity with the target wheel acceleration velocity, a setting of a control mode for braking force is performed.

In a driving force control device for a four wheel drive vehicle, generally, a presumed car body velocity is calculated by making use of a car body velocity presuming means, and a slip rate of the drive wheels is controlled. And as a drive force control device of this kind, a drive force control device is proposed in which after comparing a velocity determined by adding a limit acceleration velocity to a previously presumed car body velocity, a velocity determined by subtracting a limit deceleration velocity from the previously presumed car body velocity and the maximum velocity among the four wheel velocities, an intermediate velocity (intermediate value) thereof is determined as the currently presumed car body velocity (for example, disclosed in patent document 2).

Patent document 1: JP-B-3304575
Patent document 2: JP-A-11-189150

SUMMARY OF THE INVENTION

(Tasks to be solved by the invention)

However, with the braking force control device as disclosed in patent document 1, when a wheel velocity is larger than a target wheel velocity, since a pressure increasing mode is set with no relation to the wheel acceleration velocity and the braking torque is increased regardless to an indication of a tendency where the wheel acceleration velocity decreases and the slip rate increases, it is highly possible that a slip rate exceeds beyond the slip rate where the friction coefficient $\mu$ between the wheels and the road face maximizes because of dispersion of the friction coefficients $\mu$ of the road faces and a delay from a braking force command to an actual braking force generation.

Particularly, when a slip rate exceeds beyond the slip rate where the friction coefficient $\mu$ between the wheels and the road face maximizes such as on a compacted snow road and a frozen road, the friction coefficient $\mu$ between the wheels and the road face further lowers because of melting of the snow and ice to deteriorate the braking performance.

Further, in the driving force control device as disclosed in patent document 2, since the car body velocity is presumed based on the wheel velocity of the four wheels, when all of the slip rates of the four wheels gradually increase, the presumption error of the car body velocity enlarges which makes difficult to properly control the slip rates of the driving wheels.

The present invention is carried out in view of the above tasks to be solved, and an object of the present invention is to provide an automobile and a control device for the automobile, which permits to obtain a driving performance and a braking performance close to their limits achievable on the concerned road even such as on a compacted snow road and a frozn road.

(Counter-measure for solving the tasks)

A control device for an automobile according to the present invention for achieving the above object is a control device for an automobile for controlling a driving torque and/or a braking torque for wheels of the automobile which is characterized by controlling the driving torque or the braking torque in such a manner that when a slip rate of the wheels is kept in a range smaller than a value where a friction coefficient between the wheels and the road face maximizes, and when a command for increasing the driving torque or the braking torque is input to the control device, a first control mode for gradually increasing the driving torque or the braking torque and a second control mode for gradually decreasing the driving torque or the braking torque are selectively used in response to a slip condition.

Further, a control device for an automobile according to the present invention for achieving the above object is a control device for an automobile for controlling a driving torque and/or a braking torque for wheels of the automobile which is characterized by being provided with a slip judgment means for judging an increase of a slip rate of the wheels, a torque target value calculation means for calculating a first torque target value of increasing the driving torque or the braking torque, when a command for increasing the driving torque or the braking torque is input, a torque limiting means for calculating a second torque target value obtained by subtracting a predetermined value from the first torque target value calculated by the torque target value calculation means, a wheel acceleration velocity information acquiring means for measuring or presuming a wheel acceleration velocity, a car body acceleration velocity information acquiring means for measuring or presuming a car body acceleration velocity and an acceleration velocity feed back control means for calculating a third torque target value for performing a torque control so that the wheel acceleration velocity measured or presumed by the wheel acceleration velocity information acquiring means coincides with a wheel acceleration velocity target value obtained by multiplying a predetermined coefficient by the car body acceleration velocity measured or presumed by the car body acceleration velocity information acquiring means, and is characterized by controlling the driving torque or the braking torque by selecting of any one of the first torque target value, the second torque target value and the third torque target value in response to the judgment result by the slip judgment means and a relationship between magnitudes of the first torque target value and the third torque target value.

Further, A control device for an automobile according to the present invention for achieving the above object is a control device for an automobile for controlling a driving torque and/or a braking torque for wheels of the automobile driven or braked by four wheels which is characterized by being provided with a wheel acceleration velocity information acquiring means for measuring or presuming a wheel acceleration velocity, a car body acceleration velocity information acquiring means for measuring or presuming a car body acceleration velocity and an acceleration velocity feed back control means for controlling the driving torque or the braking torque so that the wheel acceleration velocity measured or presumed by the wheel acceleration velocity information acquiring means coincides with a wheel acceleration velocity target value obtained by multiplying a predetermined coefficient by the car body acceleration velocity measured or presumed by the car body acceleration velocity information acquiring means.

A control device for an automobile according to the present invention is desirably characterized by setting the coefficient to be multiplied by the car body acceleration velocity in response to at least one of an acceleration pedal opening degree, a brake pedal depressing amount and a steering angle.

A control device for an automobile according to the present invention is desirably characterized by being provided with a wheel velocity sensor for measuring a velocity of at least one of the wheels and a wheel torque information acquiring means for measuring or presuming the driving torque or the braking torque of at least one of the wheels and **characterized in that** the car body acceleration velocity information acquiring means presumes the car body acceleration velocity by making use of the wheel velocity measured by the wheel velocity sensor and the driving torque or the braking torque measured or presumed by the wheel torque information acquiring means.

A control device for an automobile according to the present invention is desirably **characterized in that** the car body acceleration velocity information acquiring means is provided with an effective driving and braking force calculation means for assuming a value obtained by multiplying a preset constant by a differentiation of the wheel velocity as an idling torque and for calculation an effective driving force or an effective braking force transmitted from a road face obtained by dividing a difference between the driving torque or the braking torque and the idling torque with the wheel radius, a pseudo car body velocity calculation means for calculating a pseudo car body velocity based on at least one of wheel velocities, a car body velocity, calculation means for calculating a car body velocity by integrating a car body acceleration velocity calculated by a car body acceleration velocity presumption value calculation means, an external force calculation means for calculating an external force in response to a difference between the car body velocity calculated by the car body velocity calculation means and the pseudo car body velocity calculated by the pseudo car body velocity calculation means, and the car body acceleration velocity presumption value calculation means for calculating a value obtained by dividing a sum of the effective driving force or the effective braking force calculated by the effective driving and braking force calculation means and the external force calculated by the external force calculation means with the vehicle weight as the car body acceleration velocity.

A control device for an automobile according to the present invention is desirably **characterized in that** the pseudo car body velocity calculation means calculates the pseudo car body velocity by subjecting the at least one of the wheel velocities measured by the wheel velocity sensor to at least one of a delay processing and a smoothing processing.

An automobile according to the present invention is an automobile performing a control with a control device of a driving torque and/or a braking torque for wheels of the automobile which is characterized by controlling the driving torque or the braking torque in such a manner that when a slip rate of the wheels is kept in a range smaller than a value where a frictional coefficient between the wheels and the road face maximizes, and when a command for increasing the driving torque or the braking torque is input to the control device, a first control mode for gradually increasing the driving torque or the braking torque and a second control mode for gradually decreasing the driving torque or the braking torque are selectively used in response to a slip condition.

(Advantages of the invention)

According to the present invention, even when a slip rate of the wheels is in a range smaller than a value where the frictional force between the wheels and the road face maximizes, since the control of gradually decreasing the driving torque or the braking torque is performed, the idling of the wheels can be properly suppressed, even such as on a compacted snow road and a frozen road.

Further, through presuming the car body acceleration velocity from the wheel velocity and the driving torque or the braking torque, setting the wheel acceleration velocity target value based on the presumed car body acceleration velocity and controlling the driving torque or the braking torque so that the actual wheel acceleration velocity coincides with the wheel acceleration velocity target value, the driving performance and the braking performance close to their limits achievable on the concerned road can be obtained while suppressing the idling of the wheels even such as on a compacted snow road and a frozen road.

BRIEF DESCRIPTION OAF THE DRAWINGS

Fig.1 is a constitutional diagram showing ain embodiment of an automobile to which a device according to the present invention is applied;
Fig. 2 is a system block diagram showing an embodiment of a 4WD controller to which a device according to the present invention is applied;
Fig. 3 is a block diagram of a traction control portion in the 4WD controller of the present embodiment;
Fig.4 is a block diagram of a torque control unit in the 4WD controller of the present embodiment;
Fig. 5 is a mode transition diagram of a TCS mode judgment unit in the 4WD controller of the present embodiment;
Fig.6 is a block diagram of a car body acceleration velocity observer in the 4WD controller of the present embodiment;
Fig. 7 is a graph showing an example of pseudo car body velocity producing methods by a pseudo car body velocity producing unit in the 4MD controller of the present embodiment;
Fig.8 is a block diagram of an acceleration velocity feed back controlling unit in the 4WD controller of the present embodiment;
Fig.9 is a graph showing a control characteristic when a torque control is performed by a conventional control device;
Fig. 10 is a graph showing a control characteristic when a torque control is performed by the control device of the present embodiment; and
Fig.11 is a graph showing a general relationship between slip rate and friction coefficient.

(Explanation of reference numerals)

1···Engine, 2···Transmission, 3···Electric generator, 4a, 4b··· Front wheel shaft, 4c, 4d···Rear wheel shaft, 5a, 5b···Front wheel, 5c, 5d···Rear wheel, 6···Electric power line, 7···Electric motor, 8 ···Rear differential device, 9a, 9b, 9c, 9d···Wheel velocity sensor, 100···4WD controller, 101···Motor torque target value calculating portion, 102···Motor torque presumption value calculating portion, 103···Traction control portion, 104···Field current control portion, 110···Rear wheel slip judgment unit, 111···Slip judgment unit by front and rear wheel velocity difference, 112···Slip judgment unit by rear left and right wheel velocity difference, 113···Rear wheel acceleration velocity slip judgment unity 114···Vehicle velocity slip judgment unit, 120···Torque control unit, 121···TCS mode judgment unit, 122···Car body acceleration velocity observer, 123···Torque limiter, 124···Acceleration velocity feed back control unit, 125···Torque switching unit, 137, 138, 139···Summing point, 141···Idling torque calculating portion, 142···Wheel shaft driving torque calculating portion, 143···Effective driving force calculating portion, 144··· Car body acceleration velocity presumption value calculating portion, 145···Car body velocity presumption value calculating portion, 146 ···Pseudo car body velocity producing unit, 147···External force calculating portion, 148 ··· Rear wheel acceleration velocity calculating portion, 151···Limiter, 152···Rear wheel acceleration velocity target value calculating portion, 153···Gain setting unit, 154···Limiter, 155,156···Suming point, 157···Rear wheel acceleration velocity calculating portion.

BEST MODE FOR EMBODYING THE INVENTION

At first, an embodiment of an automobile to which a control device of the present invention is applied will be explained with reference to the drawings.

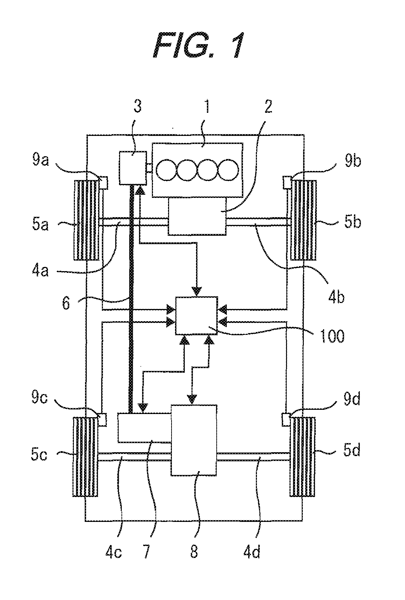

As shown in Fig.1, an automobile representing an embodiment of the present invention is a four wheel driven type automobile and includes an engine (internal combustion engine) 1, a transmission 2, an electric generator 3 and an electric motor 7.

A motive power generated by the engine 1 is transmitted to the transmission 2 and the electric generator 3. The motive power transmitted to the transmission 2 is speed changed to those suitable to the traveling condition and is transmitted to left and right front wheel shafts 4a, 4b to drive left and right front wheels 5a, 5b.

A motive power transmitted to the electric generator 3 is converted to an electric power and is fed to the electric motor 7 through an electric power line 6. The electric motor 7 is a field coil type DC motor and generates a torque by making use of the fed electric power. The torque generated by the electric motor 7 is distributed left and right through a rear differential device 8 and transmitted to rear wheel shafts 4c, 4d to drive left and right rear wheels 5c, 5d.

Wheel velocity sensors 9a, 9b, 9c, 9d are attached respectively to the front wheels 5a, 5b and the rear wheels 5c, 9d and detect individual wheel velocities of the respective wheels (the front wheels 5a, 5b, the rear wheels 5c, 5d).

The automobile of the present embodiment is provided with a 4WD controller 100. The 4WD controller 100 is an electronic control type constituted by a microcomputer and controls the electric generator 3 and the electric motor 7.

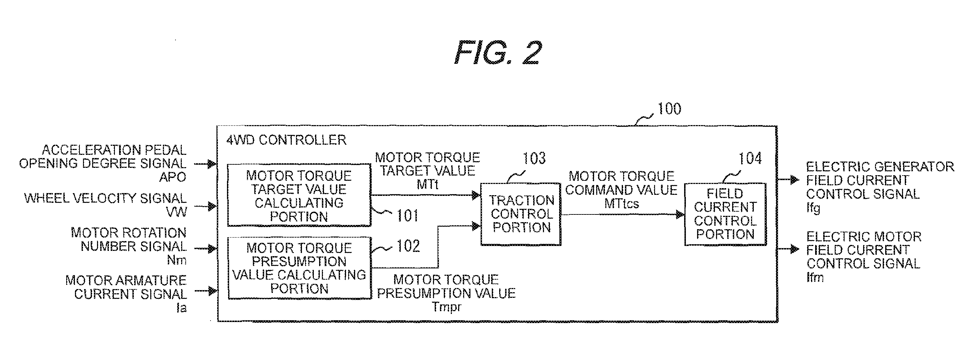

The 4WD controller 100 is provided with a motor torque target value calculating portion 101, a motor torque resumption value calculating portion 102, a traction control portion 103 and a field current control portion 104 as shown in Fig.2.

The 4WD controller 100 receivers acceleration pedal opening degree signals APO from an acceleration pedal not shown, wheel velocity signals VW from the wheel velocity sensors 9a, 9b, 9c, 9d and motor rotation number signals Nm and motor armature current signals Ia from the electric motor 7.

The 4WD controller 100 outputs generator field current control signals Ifg to the electric generator 3 and motor field current control signals Ifm to the electric motor 7.

A torque of the electric motor 7 is generally calculated by a product of a motor torque constant determined by the field of the electric motor 7 and an armature current flowing through the electric motor 7, and with regard to a field coil type motor, the motor torque constant can be controlled by adjusting the field.

Namely, the 4WD controller 100 controls an electric power generation amount of the electric generator 3 with the generator field current control signals Ifg and in addition controls a torque to be output by the electric motor 7 through controlling the field of the electric motor 7 with the motor field current control signals Ifm.

The motor torque target value calculating portion 101 determines a motor torque target value MTt in response to a difference between an average value VWF of the left and right front wheel velocities and an average value VWR of the left and right rear wheel velocities. Namely, the larger a value obtained by subtracting the average value VWR of the left and right rear wheel velocities from the average value VWF of the left and right front wheel velocities is, the larger the motor torque target value (first torque target value) MTt becomes. When a command for increasing the driving torque is input, the motor torque target value MTt is to be gradually increased.

The motor torque presumption value calculating portion 102 is a wheel torque information acquiring means, calculates a motor torque constant Kt from the motor field current control signals by making use of a map obtained in advance through such as experiments and further calculates a product of the motor torque constant Kt and the motor armature current Ia as a motor torque presumption value Tmpr.

The traction control portion 103 calculate a motor torque command value MTtcs that matches the road face condition and the vehicle condition based on the motor torque target value MTt calculated by the motor torque target value calculating portion 101. The details of the traction control portion 103 will be explained later.

The field current control portion 104, when the motor rotation number No is below a first threshold value tNm1 determined in advance, sets as the motor field current Ifm=cIfm1, when the motor rotation number Nm is above a second threshold value tNm2 determined in advance, sets as the motor field current Ifm=cIfm2 and when the motor rotation number is between the first threshold value tNm1 and the second threshold value $tnm^2$, successively decreases the motor field current Ifm from cIfm1 to cIfm2. Wherein, tNm1<tNm2, cIfm1>cIfm2.

The field current control portion 104 calculates a motor torque constant Kt from the motor field current Ifm by making use of a map obtained in advance through such as experiments, further calculates a motor armature current target value Iat obtained by dividing the motor torque commend value MTtcs with the motor torque constant Kt and adjusts the generator field current Ifg so that an actual motor armature current Ia coincides with the motor armature current target value Iat.

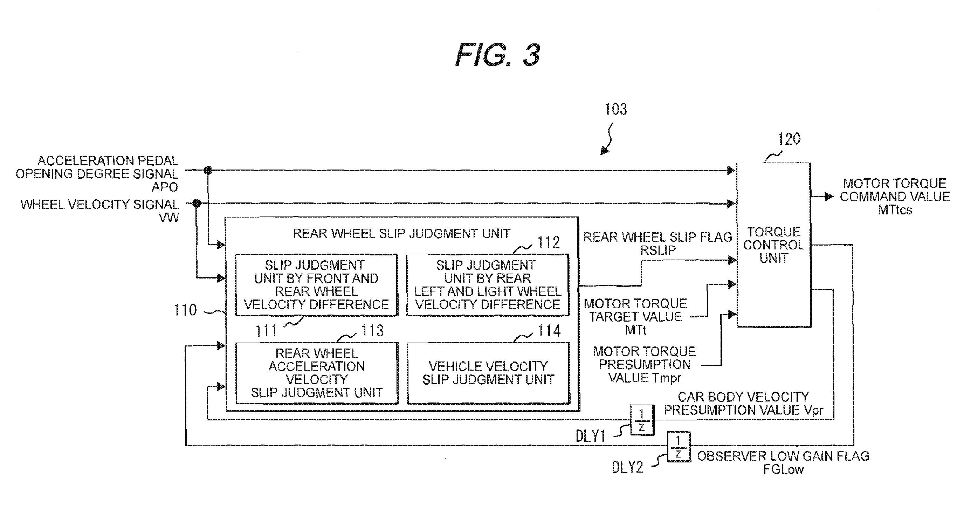

Fig. 3 shows a detailed constitutional structure of the traction control portion 103.

The traction control portion 103 is provided with a rear wheel slip judgment unit 110 and a torque control unit 120.

The rear wheel slip judgment unit 110 calculates a rear wheel slip flag RSLIP from an acceleration pedal opening degree APO, a wheel velocity VW, an observer low gain flag FGLow and a car body velocity presumption value Vpr. As the observer low gain flag FGLow and the car body velocity presumption value Vpr, the values output from the torque control unit 120 and delayed by one sampling period with sample delays DLY1, DLY2 are used. Subsequently, the details of the rear wheel slip judgment unit 110 will be explained.

The rear wheel slip judgment unit 110 is constituted from a slip judgment unit 111 by the front and rear wheel velocity difference, a slip judgment unit 112 by the rear left and right wheel velocity difference, a rear wheel acceleration velocity slip judgment unit 113 and a vehicle velocity slip judgment unit 114.

In the slip judgment unit 111 by the front and rear wheel velocity difference, when a value DVW obtained by subtracting from a larger one of the left and right rear wheel velocities a smaller one of the left and right front wheel velocities becomes larger than a threshold value tDVW1 set in advance, it is judged that the slip rate of the rear wheels increased, and a rear wheel slip flag RSLIP is set. Then, when a value DVW obtained by subtracting from a larger one of the left and right rear wheel velocities a smaller one of the left and right front wheel velocities becomes smaller than a threshold value tDVW$_2$ set in advance, it is judged that the slip rate of the rear wheels decreased, and the rear wheel slip flag RSLIP is cleared.

The slip judgment unit 112 by the rear left and right wheel velocity difference compares rear left and right wheel velocities VWRL, VWRR and when the velocity difference DVWRL of both becomes larger than a threshold value tDVWRL1 set in advance, judges that the rear wheel slip rate increased and sets the rear wheel slip flag RSLIP. Then, when the velocity difference DVWRL becomes smaller than a threshold value tDVWRL2 set in advance, the unit 112 judges that the rear wheel slip rate sufficiently decreased and clears the rear wheel slip flag RSLIP.

The rear wheel acceleration velocity slip judgment unit 113 calculates a rear wheel acceleration velocity average value GWR after differentiating an average value of the left and right rear wheel velocities VWRL, VWRR, and when the rear wheel acceleration velocity average value GWR becomes larger than a threshold value tGWR1 set in advance, judges that the rear wheel slip rate increased and sets the rear wheel slip flag RSLIP. The threshold tGWR1 is what is set in response to the acceleration pedal opening degree APO, therefore, the threshold value tGWR1 is set in such a manner that when the acceleration pedal opening degree APO is large, the threshold value tGWR1 becomes large and when the acceleration pedal opening degree APO is small, the threshold value tGWR1 becomes small. Then, when the rear wheel acceleration velocity average value GWR becomes smaller than a threshold value tGWR2 set in advance, the unit 113 judges that the rear wheel slip rate sufficiently decreased and clears the rear wheel slip flag RSLIP.

The vehicle velocity slip judgment unit 114, when a ratio of the car body velocity presumption value Vpr and the left and right rear wheel velocities VWRL, VMRR, namely, any one of or both of VWRL/Vpr, VWRR/Vpr becomes larger than a threshold value tVWSR set in advance as well as the observer low gain flag FGLow is set, judges that the rear wheel slip rate increased and sets the rear wheel slip flag SLIP. Then, when a time tTVWSR set in advance has passed after the rear wheel slip flag RSLIP was set, the rear wheel slip flag RSLIP is cleared.

Namely, when at least one of the slip judgment unit 111 by the front and rear wheel velocity difference, the slip judgment unit 112 by the rear left and right wheel velocity difference, the rear wheel acceleration velocity slip judgment unit 113 and the vehicle velocity slip judgment unit 114 judges that the rear wheel slip rate increased, the rear wheel slip judgment unit 110 sets the rear wheel slip flag RSLIP.

The torque control unit 120 calculates a motor torque command value MTtcs from an acceleration pedal opening degree APO, a wheel velocity VW, a rear wheel slip flag RSLIP, a motor torque target value MTt and a motor torque presumption value Tmpr as well as calculates an observer low gain flag GFLow and a car body velocity presumption value Vpr.

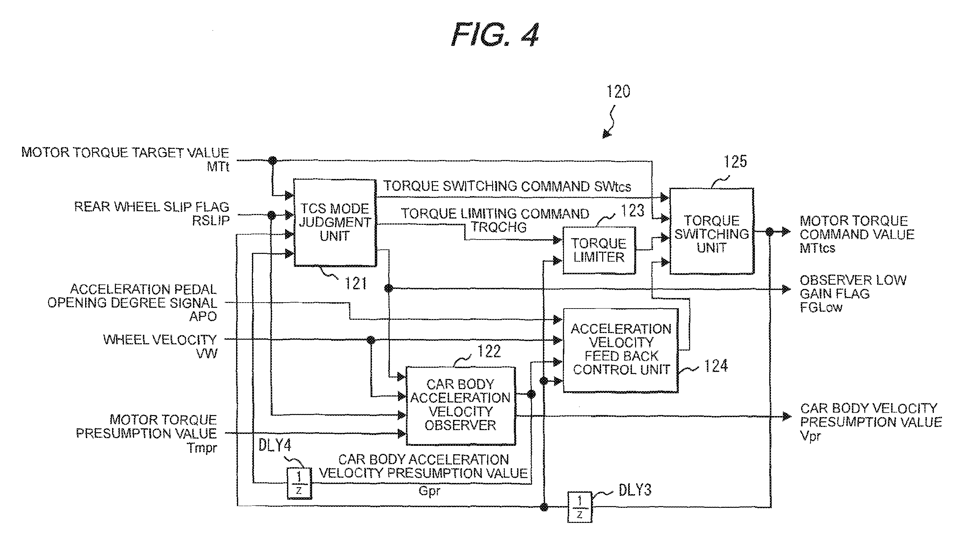

Fig.4 shows a detailed constitutional structure of the torque control unit 120.

The torque control unit 120 includes a TCS mode judgment unit 121, a car body acceleration velocity observer 122, a torque limiter 123, an acceleration velocity feed back control unit 124 and a torque switching unit 125.

The TCS mode judgment unit 121 determines a TCS mode from a motor torque target value MTt, a rear wheel slip flag RSLIP, a car body acceleration velocity presumption value Gpr and a motor torque command value MTtcs and outputs a torque switching command SWtcs, a torque limiting command TRQCHG and a observer low gain flag FGLow. In the TCS mode judgment unit 121, as the motor torque command value MTtcs and as the car body acceleration velocity presumption value Gpr, the value output from the torque switching unit 125 and the value output from the car body acceleration velocity observer 122 are respectively used while delaying the same by one sampling period with sample delays DLY3, DLY4.

Details of the TCS mode judgment performed by the TCS mode judgment unit 121 will be explained later.

The car body acceleration velocity observer 122 outputs a car body acceleration velocity resumption value Gpr and a car body velocity presumption value Vpr from a rear wheel slip flag RSLIP, an observer low gain flag FGLow output from the TCS mode judgment unit 121, a wheel velocity VW and a motor torque presumption value Tmpr. The details of the car body acceleration velocity observer 122 will also be explained later.

The torque limiter 123 subtracts a fixed value set in advance from the motor torque command value MTtcs or maintains the motor torque command value MTtcs and outputs the same as a motor torque second target value (second torque target value) MTt2 according to the torque limiting command TRQCHG output from the TCS mode judgment unit 121. As the motor torque command value MTtcs, a value output from the torque switching unit 125 is used while delaying the same by one sampling period with a sample delay DLY3. The motor torque second target value MTt2 is a value obtained by subtracting a fixed value from the motor torque target value MTt.

Namely, the torque limited 123 calculates a second torque target value obtained by subtracting a predetermined value from the first torque target value calculated by the torque target, value calculating means.

The acceleration velocity feed back control unit 124 outputs a motor torque third target value MTt3 from an acceleration pedal opening degree APO, a wheel velocity VW, a car body acceleration velocity presumption value Gpr output from the car body acceleration velocity observer 122 and a motor torque command value MTtcs. In the acceleration velocity feed back control unit 124, as the motor torque command value MTtcs a value output from the torque switching unit 125 is used while delaying the same by one sampling period with a sample delay DLY3. Details of the acceleration velocity feed back control unit 124 will also be explained later.

The torque switching unit 125 outputs any one of the motor torque target value MTt, the motor torque second target value MTt2 and the motor torque third target value MTt3 as the motor torque command value MTtcs according to the torque switching command SMtcs output from the TCS mode judgment unit 121.

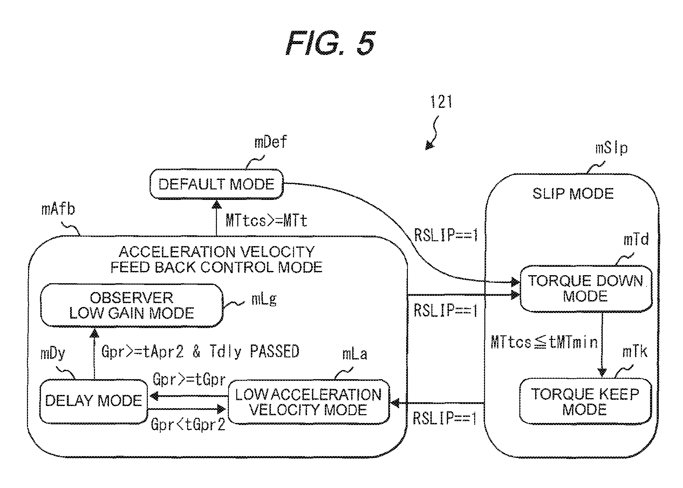

The TCS mode judgment performed by the TCS mode judgment unit 121 will be explained with reference to Fig.5.

In this TCS mode judgment, a default, mode mDef is at first selected. In the default mode mDef, the torque switching command SWtcs is set so that the motor torque target value MTt assumes the motor torque command value MTtcs, the torque limiting command TRQCHG is set so that the motor torque command value MTtcs is maintained and the observer low gain flag FGLow is cleared.

During when the default mode mDef is selected, when the rear wheel slip flag RSLIP is set, a slip mode mSlp is selected. In the slip mode mSlp, the torque switching command SWtcs is set so that the motor torque second target value MTt2 assumes the motor torque command value MTtcs and the observer low gain flag FGLow is kept cleared.

Further, the slip mode mSlp includes a torque down mode mTd and a torque keep mode mTk, and at first the torque down mode mTd is selected and the torque limiting command TRQCHG is set so that a value obtained by subtracting a fixed value set in advance from the motor torque command value MTtcs is output as the second target value MTt2.

During when the torque down mode mTd is selected, when the motor torque command value MTtcs reduces below a value tMTmin set in advance, the torque keep mode mTk is selected, the torque limiting command TRQCHG is set so that the motor torque command value MTtcs is maintained and the same is output as the second target value MTt2.

Namely, during when the slip mode mslp is selected, a control of lowering the motor torque command value MTtcs down to the fixed value tMTmin with a fixed speed is performed.

During when the slip mode mSlp is selected, when the rear wheel slip flag SLIP is cleared, an acceleration velocity feed back control mode mAfb is selected, the torque switching command SWtcs is set so that the motor torque third target value MTt3 is output as the motor torque command value MTtcs and the torque limiting command TRQCHG is set so that the motor torque command value MTtcs is maintained.

The acceleration velocity feed back control mode mAfb includes a low acceleration velocity mode mLa, a delay mode mDy and an observer low gain mode mLg, and at first, the low acceleration velocity mode mLa is selected and the observer low gain flag FGLow is kept cleared.

During when the low acceleration velocity mode mLa is selected, when the car body acceleration velocity presumption value Gpr exceeds a threshold value tGpr1 set in advance, the delay mode mDy is selected and the observer low gain flag FGLow is kept cleared.

Under the condition that the delay mode mDy is selected, when the car body acceleration velocity presumption value Gpr lowers below a threshold value tGpr2 set in advance, the low acceleration velocity mode mLa is selected.

Under the condition that the delay mode mDy is selected, when the car body acceleration velocity presumption value Gpr lowers below a threshold value tGpr2 set in advance as well as when a time Tdly set in advance has passed, the observer low gain mode mLg is selected and the observer low gain flag FGLow is set.

During when the acceleration velocity feed back control mode mSlp is selected, when the motor torque command value MTtcs exceeds the motor torque target value MTt, the default mode mDef is selected. Namely, the default mode mDef is selected in response to the magnitude relationship between the motor torque target value MTt and the motor torque third target value MTt3.

The TCS mode judgment unit 121 selects the respective modes as above and outputs the torque switching command SWtcs, the torque limiting command TRQCHG and the observer low gain flag FGLow in response to the respective modes.

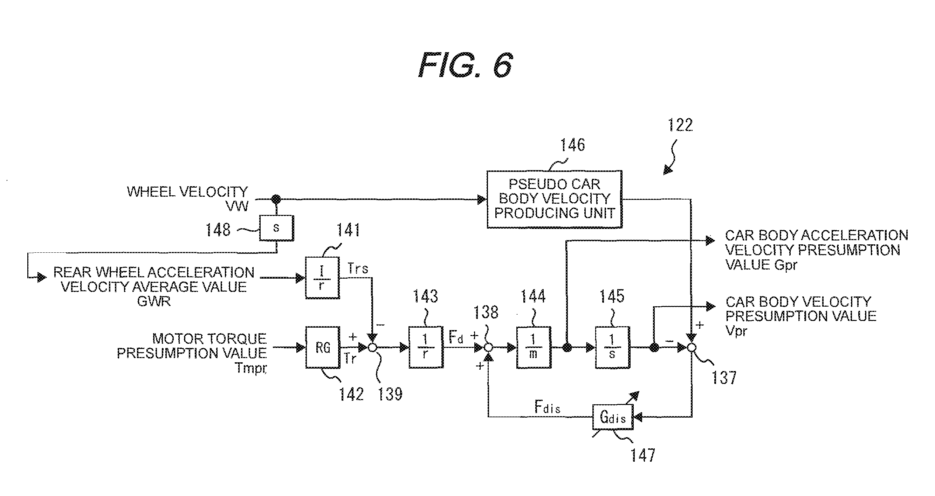

Fig. 6 shows details of the car body acceleration velocity observer 122.

The car body acceleration velocity observer 122 representing a car body acceleration velocity information acquiring means differentiates an average value VWR of left and right rear wheel velocities with a rear wheel acceleration velocity calculating portion (differentiator) 148 and calculates a rear wheel acceleration velocity average value GWR. Subsequently, in an idling torque calculating portion 14, an idling torque Trs is calculated by multiplying the rear wheel acceleration velocity average value GMR by an inertia moment I of such as the rear wheels, the rear wheel shafts 4c, 4d rotating together with the rear wheels and the rear differential shaft 8 and then dividing the same with the wheel radius r, in a wheel shaft, driving torque calculating portion 142, a driving torque Tr on the wheel shaft is calculated by multiplying the motor torque presumption value Tmpr by a reduction gear ratio RG of the differential shaft 8, in a summing point, from the driving torque Tr the idling torque Trs is subtracted, and in an effective driving force calculating portion 143, an effective driving force Fd is calculated by dividing the above sum with the wheel radius r.

Herein, the effective driving force Fd implies an effective driving force transferred to the road face, as explained above the effective driving force Fd can be calculated by subtracting a torque consumed only for velocity increase of the wheels from the output; torque of the electric motor 7 and then by dividing the same with the wheel radius r.

Subsequently, in a summing point 138, the effective driving force Fd and an external force (force acting in front and back direction of the vehicle other than the effective driving force) Fdis and the sum is divided by the weight m of the vehicle in car body acceleration velocity presumption value calculating portion 144 to obtain a car body acceleration velocity presumption value Gpr.

In a car body velocity presumption value calculating portion (integrator) 145, the car body velocity presumption value Vpr is calculated by integrating the car body acceleration velocity Gpr, the value obtained in a summing point 137 by subtracting the car body velocity presumption value Vpr from the pseudo car body velocity Vps calculated in a pseudo car body velocity producing unit 146 is multiplied by a gain Gdis in the external force calculating portion 147 to adjust the external force Fdis. The pseudo car body velocity producing unit 146 will be explained later.

The gain Gdis is switched in response to the TCS modes, and during when the slip mode mSlp and the observer low gain mode mLg are selected, the observer low gain flag FGLow is set and the gain Gdis is reduced in comparison with when other modes are selected.

For example, when the observer low gain flag FGLow is cleared, Gdis=1000, and when the observer low gain flag FGLow is set, Gdis=100. By reducing the gain Gdis, the variation of the external force Fdis is reduced, and since the variation of the car body acceleration velocity presumption value Gpr greatly depends on the variation of the effective driving force Fd, an actual car body acceleration velocity follow-up performance when the effective driving force Fd reduces due to slip of the rear wheels can be improved.

Herein, the gain Gdis is divided into two steps, however, the gain Gdis can be set in further multiple steps in response to car body velocity by making use of a map, in such instance, it is desirable to set the gain Gdis larger when the car body velocity is large so that the larger the car body velocity is, the larger the variation of the external force becomes. Further, a value obtained by integrating a product of a value obtained by subtracting the car body velocity presumption value Vpr from the pseudo car body velocity Vps and a value of the gain Gdis can be used as the external force Fdis.

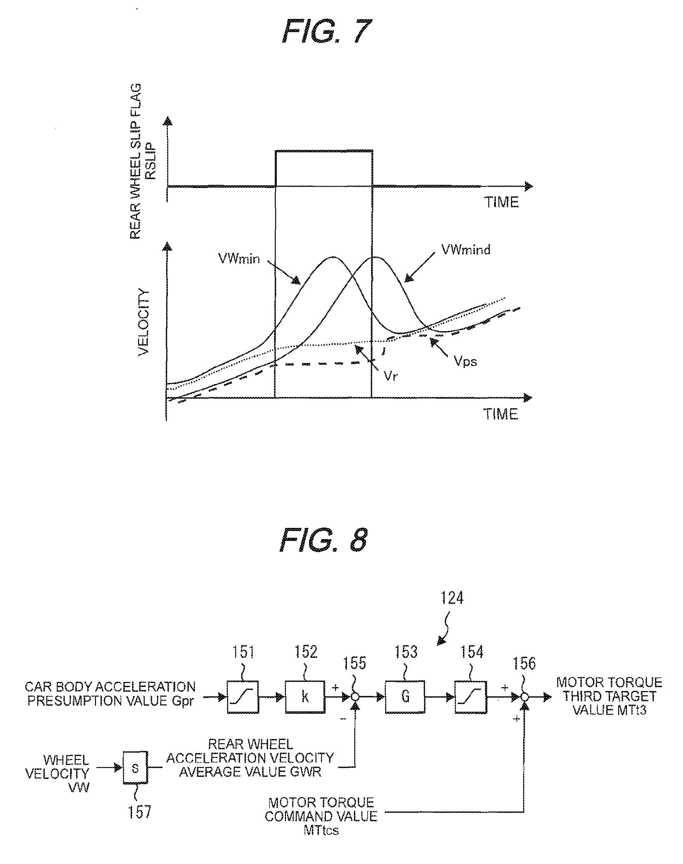

Fig. 7 shows an example of methods of producing a pseudo car body velocity by the pseudo car body velocity producing unit 146. The pseudo car body velocity producing unit 146 calculates as the pseudo car body velocity Vps a value obtained by subjecting to a well known low pass filter a smaller wheel velocity among a minimum wheel velocity VWmin representing the smallest wheel velocity among the four wheel velocities and a minimum wheel velocity VWmind obtained after subjecting the minimum wheel velocity VMmin to a delay processing.

Further, when the rear wheel slip flag RSLIP is set, since the wheel velocity is hold, the slip rate SR of the front wheels is already increased, a large deviation of the pseudo car body velocity Vps from the actual car body velocity can be prevented even when the slip rate SR of the rear wheels increases.

Further, the delay processing is not limited to one time, the wheel velocity can be subjected to the delay processing in a multiple of times to obtain a plurality of wheel velocities, and a value obtained by subjecting the smallest wheel velocity among the above obtained plurality of wheel velocities can be subjected to a smoothing processing through a well known low pass filter to obtain a value to be used as the pseudo car body velocity Vps.

Fig. 8 shows details the acceleration velocity feed back control performed in the acceleration velocity feed back controlling unit 124.

The acceleration velocity feed back control 124 limits the car body acceleration velocity presumption value Gpr above a value cGmin set in advance by the limiter 151 and calculates the rear wheel acceleration velocity target value DGWR by multiplying the car body acceleration velocity presumption value Gpr subjected to the limiting processing by a gain k (coefficient). The gain k is calculated according to the following equation (3).

$$k = 1/(1-DSR) \qquad \cdots (3)$$

Wherein, DSR is a target slip rate and can be a constant, however, the target slip rate DSR is set according to an acceleration pedal opening degree APO by making use of a map. Herein, the larger the acceleration pedal opening degree APO is, the larger the target slip rate DSR is set.

Subsequently, in a summing point 155, a difference (deviation) between the rear wheel acceleration velocity target value DGWR and the rear wheel acceleration velocity average value GWR calculated through differential operation by a rear wheel acceleration velocity calculating portion (differentiator) 157 is obtained, the difference is multiplied by a gain G in a gain setting unit 153, the output therefrom is limited by limiter 154 in a proper range in view of a response characteristic of the electric motor 7 and in a summing point 156 a value obtained by adding the motor torque command value MTtcs is calculated as the motor torque third target, value MTt3.

Namely, in the acceleration velocity feed back control, the target wheel acceleration velocity is calculated based on the car body acceleration velocity so that the variation speed of the slip rate SR assumes zero when the slip rate SR coincides with the target slip rate DSR and the wheel torque is controlled so that the actual wheel acceleration velocity coincides with the target wheel acceleration velocity.

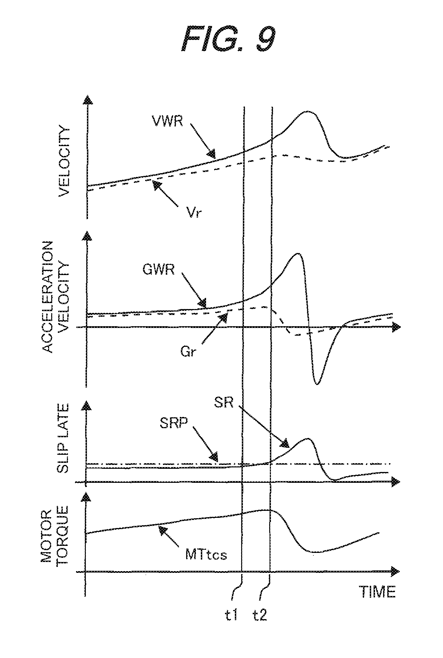

Figs.9 and 10 respectively show relationships between velocity (rear wheel velocity average value VWR, car body velocity Vr), acceleration velocity (rear wheel acceleration velocity average value GWR, car body acceleration velocity Gr), slip rate (rear wheel slip rate) SR and motor torque command value MTtcs, when the torque is controlled respectively by a conventional control device and the control device of the present embodiment.

As shown in Fig.9, with the conventional control device, the rear wheel acceleration velocity average value GWR begins to depart from the car body acceleration velocity Gr at time point t1. Although this shows signs of increasing the slip rate SR, since the difference between the rear wheel velocity average value VWR and the car body velocity is small and the slip rate SR does not exceed the slip rate SRP where the friction coefficient maximizes, the motor torque command value MTtcs is not decreased by the conventional control method.

Subsequently, at time point t2, since the slip rate SR exceeds the slip rate SRP where the friction coefficient maximizes, the motor torque command value MTtcs is decreased. However, because of dispersion of friction coefficient on road faces and a delay from a decrease of the motor torque command value MTtcs to an actual motor torque decrease, since the slip rate is caused to be increased, the snow and ice on the road face melt, which is feared to further reduce the friction coefficient of the road.

With the present embodiment, as shown in Fig. 10, since the rear wheel acceleration velocity average value GWR increases and exceeds the above explained rear wheel acceleration velocity target value DGWR at time point t3, the motor torque command value MTtcs is gradually decreased.

Subsequently, in response to the event that the slip rate SR exceeds the slip rate SRP where the friction coefficient maximizes and the car body acceleration velocity Gr begins to decrease at time point t4, the motor torque command value MTtcs is further decreased.

In the present embodiment, before the slip rate SR exceeds the slip rate SRP where the friction coefficient maximizes, since an increase of the slip rate SR is estimated from the relationship between the rear wheel acceleration velocity average value GWR and the car body acceleration velocity Gr, the motor torque command value MTtcs is decreased in advance, an increase of the slip rate SR can be suppressed.

In the present embodiment as has been explained hitherto, the car body acceleration velocity is presumed from a wheel velocity and a torque, and the target wheel acceleration velocity is set based on an acceleration pedal opening degree and a presumed car body acceleration velocity, then a motor torque, namely a rear wheel driving force is controlled so that an actual wheel acceleration velocity coincides with the target wheel acceleration velocity, thereby, even on such as a compacted snow road and frozen road, a driving performance close to a limit achievable on the concerned road can be obtained.

In the above embodiment, although an example in which the present invention is applied to a four wheel drive vehicle wherein the front wheels 5a, 5b are driven by the engine 1 and the rear wheels 5c, 5d are driven by the electric motor 7 was shown, the present invention is not limited thereto, the present invention can be applied to an automobile wherein the four wheels are driven by an engine as well as to an automobile wherein the four wheels are driven by an electric motor. Further, the present invention is not limited to the driving operation but can be applied to an automobile wherein the braking operation is performed for the four wheels thereof.

Further, in the above embodiment, although the target slip rate DSR is set in response to an acceleration pedal opening degree APO, but not being limited to the acceleration pedal opening degree APO, the target slip rate DSR can be set in response to a steering angle.

Further, in the above embodiment, although an example was shown in which the present invention is applied only to the operation during driving, however, when controlling a braking torque, the target slip rate DSR can be set in response to a brake pedal depressing amount as well as even when the brake pedal is not depressed, the braking torque can be controlled so that a deceleration corresponding to an engine brake can be obtained.

Since the car body acceleration velocity assumes a negative value during braking operation, when calculating the pseudo car body velocity Vps with the pseudo car body velocity producing unit 146, it is desirable to switch the pseudo car body velocity producing method in such a manner that in place of the minimum wheel velocity Vwmin representing the smallest wheel velocity among the four wheel velocities, the maximum wheel velocity Vwmax representing the largest wheel velocity among the four wheel velocities. Further, with regard to the limited 151 in the acceleration velocity feed back control unit 124, it is desirable to switch the limiter 151 so that the car body acceleration velocity presumption value Gpr is limited below the value cGmax set in advance.

Further, in the above embodiment, although an example was shown in which the present invention is applied only to the operation during driving af an automobile provided with wheels driven by an electric motor, the present invention can be applied to when a negative driving torque is generated due to a regenerative braking by an electric motor. In such instance like the operation during braking as explained above, since the car body acceleration velocity becomes negative, it is desirable to effect the switching like the operation during braking as explained above.

**Claims**

1. A control device for an automobile for controlling a driving torque and/or a braking torque for wheels of the automobile, **characterized in that** when a slip rate of the wheels is kept in a range smaller than a value where a friction coefficient between the wheels and the road face maximizes, and when a command for increasing the driving torque or the braking torque is input to the control device, the driving torque or the braking torque is controlled by selectively used a first control mode for gradually increasing the driving torque or the braking torque and a second control mode for gradually decreasing the driving torque or the braking torque in response to a slip condition.

2. A control device for an automobile for controlling a driving torque and/or a braking torque for wheels of the automobile, **characterized by** being provided with a slip judgment means for judging an increase of a slip rate of the wheels, a torque target value calculation means for calculating a first torque target value of increasing the driving torque or the braking torque, when a command for increasing the driving torque or the braking torque is input, a torque limiting means for calculating a second torque target value obtained by subtracting a predetermined value from the first torque target value calculated by the torque target value calculation means, a wheel acceleration velocity information acquiring means for measuring or presuming a wheel acceleration velocity, a car body acceleration velocity information acquiring means for measuring or presuming a car body acceleration velocity, and an acceleration velocity feed back control means for calculating a third torque target value for performing a torque control so that the wheel acceleration velocity measured or presumed by the wheel acceleration velocity information acquiring means coincides with a wheel acceleration velocity target value obtained by multiplying a predetermined coefficient by the car body acceleration velocity measured or presumed by the car body acceleration velocity information acquiring means, and **characterized in that** the driving torque or the braking torque is controlled by selecting any one of the first torque target value, the second torque target value and the third torque target value in response to the judgment result by the slip judgment means and the relationship between magnitudes of the first torque target value and the third torque target value.

3. A control device for an automobile for controlling a driving torque and/or a braking torque for wheels of the automobile, **characterized by** being provided with, a wheel acceleration velocity information acquiring means for measuring or presuming a wheel acceleration velocity, a car body acceleration velocity information acquiring means for measuring or presuming a car body acceleration velocity, and an acceleration velocity feed back control means for controlling the driving torque or the braking torque so that the wheel acceleration velocity measured or presumed by the wheel acceleration velocity information acquiring means coincides with a wheel acceleration velocity target value obtained by multiplying a predetermined coefficient by the car body acceleration velocity measured or presumed by the car body acceleration velocity information acquiring means.

4. A control device for an automobile according to claim 3 **characterized in that** the coefficient to be multiplied by the car body acceleration velocity is set in response to at least one of an acceleration pedal opening degree, a brake pedal depressing amount and a steering angle.

5. A control device for an automobile according to any one of claims 2 through 4 4 **characterized by** being provided with a wheel velocity sensor for measuring a velocity of at least one of the wheels and a wheel torque information acquiring means for measuring or presuming the driving torque or the braking torque of at least one of the wheels and
**characterized in that** the car body acceleration velocity information acquiring means resumes the car body acceleration velocity by making use of the wheel velocity measured by the wheel velocity sensor and the driving torque or the braking torque measured or presumed by the wheel torque information acquiring means.

6. A control device for an automobile according to claims 2 through 5 **characterized in that** the car body acceleration velocity information acquiring means is provided with an effective driving and braking force calculation means for assuming a value obtained by multiplying a preset constant by a differentiation of the wheel velocity as an idling torque and for calculating an effective driving force or an effective braking force transmitted from a road face obtained by dividing a difference between the driving torque or the braking torque and the idling torque with the wheel radius, a pseudo car body velocity calculation means for calculating a pseudo car body velocity based on at least one of wheel velocities, a car body velocity calculation means for calculating a car body velocity by integrating a car body acceleration velocity calculated by a car body acceleration velocity presumption value calculation means, an external force calculation means for calculating an external force in response to a difference between the car body velocity calculated by the car body velocity calculation means and the pseudo car body velocity calculated by the pseudo car body velocity calculation means, and the car body acceleration velocity presumption value calculation means for calculating a value obtained by dividing a sum of the effective driving force or the effective braking force calculated by the effective driving and braking force calculation means and the external force calculated by the external force calculation means with the vehicle weight as the car body acceleration velocity.

7. A control device for an automobile according to claim 6 **characterized in that** the pseudo car body velocity calculation means calculates the pseudo car body velocity by subjecting the at least one of the wheel velocities measured by the wheel velocity sensor to at least one of a delay processing and a smoothing processing.

8. An automobile performing a control of a driving torque and/or a braking torque for wheels of the automobile with a control device, **characterized in that** when a slip rate of the wheels is kept in a range smaller than a value where a friction coefficient between the wheels and the road face maximizes, and when a command for increasing the driving torque or the braking torque is input to the control device, the driving torque or the braking torque is controlled by selectively using a first control mode for gradually increasing the driving torque or the braking torque or a second control mode for gradually decreasing the driving torque or the braking torque in response to a slip condition.

# FIG. 1

## FIG. 2

ACCELERATION PEDAL OPENING DEGREE SIGNAL APO

WHEEL VELOCITY SIGNAL VW

MOTOR ROTATION NUMBER SIGNAL Nm

MOTOR ARMATURE CURRENT SIGNAL la

100

4WD CONTROLLER

MOTOR TORQUE TARGET VALUE CALCULATING PORTION — 101

MOTOR TORQUE TARGET VALUE MTt

103

TRACTION CONTROL PORTION

MOTOR TORQUE COMMAND VALUE MTtcs

104

FIELD CURRENT CONTROL PORTION

MOTOR TORQUE PRESUMPTION VALUE CALCULATING PORTION — 102

MOTOR TORQUE PRESUMPTION VALUE Tmpr

ELECTRIC GENERATOR FIELD CURRENT CONTROL SIGNAL Ifg

ELECTRIC MOTOR FIELD CURRENT CONTROL SIGNAL Ifm

EP 2 106 955 A1

## FIG. 3

EP 2 106 955 A1

## FIG. 4

MOTOR TORQUE TARGET VALUE MTt

REAR WHEEL SLIP FLAG RSLIP

ACCELERATION PEDAL OPENING DEGREE SIGNAL APO

WHEEL VELOCITY VW

MOTOR TORQUE PRESUMPTION VALUE Tmpr

120

125

TCS MODE JUDGMENT UNIT
121

TORQUE SWITCHING COMMAND SWtcs

TORQUE LIMITING COMMAND TRQCHG
123

TORQUE LIMITER

TORQUE SWITCHING UNIT

ACCELERATION VELOCITY FEED BACK CONTROL UNIT
124

CAR BODY ACCELERATION VELOCITY OBSERVER
122

DLY4
1/z

CAR BODY ACCELERATION VELOCITY PRESUMPTION VALUE Gpr

DLY3
1/z

MOTOR TORQUE COMMAND VALUE MTtcs

OBSERVER LOW GAIN FLAG FGLow

CAR BODY VELOCITY PRESUMPTION VALUE Vpr

EP 2 106 955 A1

15

# FIG. 5

121

mDef

DEFAULT MODE

mSlp

SLIP MODE

mAfb

MTtcs>=MTt

ACCELERATION VELOCITY
FEED BACK CONTROL MODE

OBSERVER
LOW GAIN MODE                    mLg

RSLIP==1

mTd

TORQUE DOWN
MODE

RSLIP==1

mDy    Gpr>=tApr2 & Tdly PASSED    mLa

Gpr>=tGpr

DELAY MODE          LOW ACCELERATION
VELOCITY MODE

Gpr<tGpr2

MTtcs≦tMTmin    mTk

TORQUE KEEP
MODE

RSLIP==1

FIG. 6

## FIG. 7

## FIG. 8

# FIG. 9

## FIG. 10

## FIG. 11

<h3 style="text-align:center">INTERNATIONAL SEARCH REPORT</h3>

| | International application No. |
|---|---|
| | PCT/JP2008/050320 |

**A. CLASSIFICATION OF SUBJECT MATTER**
*B60L15/20(2006.01)i, B60L11/14(2006.01)i, B60T8/1755(2006.01)i, B60W10/08 (2006.01)i, B60W30/02(2006.01)i*

According to International Patent Classification (IPC) or to both national classification and IPC

**B. FIELDS SEARCHED**

Minimum documentation searched (classification system followed by classification symbols)
B60L1/00-15/42, B60T8/1755, B60W10/08, B60W30/02

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-051889 A (Toyota Motor Corp.), 24 February, 2005 (24.02.05), Par. Nos. [0026] to [0027] (Family: none) | 2-7 |
| A | JP 2006-136173 A (Nissan Motor Co., Ltd.), 25 May, 2006 (25.05.06), Par. No. [0026] (Family: none) | 2-7 |
| A | JP 2000-190836 A (Aisin Seiki Co., Ltd.), 11 July, 2000 (11.07.00), Full text & US 6203121 B1 & DE 19963135 A1 | 2-7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 April, 2008 (15.04.08) | 01 May, 2008 (01.05.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/050320

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-025110 A  (Toshiba Corp.),<br>26 January, 2001 (26.01.01),<br>Full text<br>(Family: none) | 2-7 |

Form PCT/ISA/210 (continuation of second sheet) (April 2007)

## INTERNATIONAL SEARCH REPORT

| International application No. |
| --- |
| PCT/JP2008/050320 |

| Box No. II      Observations where certain claims were found unsearchable (Continuation of item 2 of first sheet) |
| --- |

This international search report has not been established in respect of certain claims under Article 17(2)(a) for the following reasons:

1. ☐ Claims Nos.:
   because they relate to subject matter not required to be searched by this Authority, namely:

2. ☒ Claims Nos.: 1 and 8
   because they relate to parts of the international application that do not comply with the prescribed requirements to such an extent that no meaningful international search can be carried out, specifically:
   The description does not mention that either of a first control mode for gradually increasing drive torque or braking torque and a second control mode for gradually reducing drive torque or braking torque is selected and used.   Therefore, claims 1 and 8 lack support within the meaning of PCT Article 6.

3. ☐ Claims Nos.:
   because they are dependent claims and are not drafted in accordance with the second and third sentences of Rule 6.4(a).

| Box No. III      Observations where unity of invention is lacking (Continuation of item 3 of first sheet) |
| --- |

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable,
the                                             payment of a protest fee.

                                        ☐ The additional search fees were accompanied by the applicant's protest but the applicable protest
                                             fee was not paid within the time limit specified in the invitation.

Form PCT/ISA/210 (continuation of first sheet (2)) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3304575 B

- JP 11189150 A